(19) Europäisches Patentamt / European Patent Office / Office européen des brevets

(11) **EP 2 133 839 A1**

(12) **DEMANDE DE BREVET EUROPEEN**

(43) Date de publication:
**16.12.2009 Bulletin 2009/51**

(51) Int Cl.:
***G06T 1/00*** (2006.01)

(21) Numéro de dépôt: **09161846.2**

(22) Date de dépôt: **03.06.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **12.06.2008 FR 0853908**

(71) Demandeur: **THOMSON LICENSING**
**92100 Boulogne-Billancourt (FR)**

(72) Inventeurs:
• **THIEBAUD, Sylvain**
**92648 Boulogne cedex (FR)**

• **BOURDON, Pascal**
**92648 Boulogne cedex (FR)**
• **DOYEN, Didier**
**92648 Boulogne cedex (FR)**

(74) Mandataire: **Browaeys, Jean-Philippe et al**
**Thomson,**
**European Patent Operations**
**46, Quai Alphonse Le Gallo**
**92648 Boulogne Cedex (FR)**

(54) **Procédé de traitement d'images pour lutter contre la copie**

(57) L'invention concerne un procédé de traitement d'images source destiné à lutter contre leur copie par un caméscope ou une caméra lors de leur affichage, par exemple dans une salle de cinéma. La séquence d'images source représente une scène. Selon l'invention, le procédé comprend les étapes suivantes :
- détection (20) , dans ladite scène, d'au moins une zone correspondant à un objet de la scène,
- sélection (21) de la totalité des pixels de ladite au moins une zone dans au moins une image source de la séquence ; et
- traitement (22) de ladite au moins une image source pour modifier la couleur des pixels sélectionnés ou la composition spectrale de la lumière émise par les pixels sélectionnés de sorte que la couleur perçue des pixels sélectionnés soit inchangée dans l'image source traitée par rapport à l'image source.

FIGURE 6

# Description

Domaine de l'invention

La présente invention se situe dans le domaine de la protection de contenus vidéo. L'invention concerne un procédé de traitement d'images source destiné à lutter contre leur copie par un caméscope ou une caméra lors de leur affichage, par exemple dans une salle de cinéma.

Arrière-plan technologique

Plusieurs techniques, dites anti-caméscopes, ont été développées récemment pour lutter contre ces copies illégales. Dans la suite de la description, on entend par copie illégale une copie de film effectuée frauduleusement par un caméscope ou une caméra. De même, on désigne par spectateur illégal un spectateur regardant une copie illégale. A l'inverse, on désigne par copie légale une copie de film qui a été distribuée légalement. Le spectateur légal désigne un spectateur regardant une copie légale. Ces techniques anti-caméscopes visent essentiellement à détériorer la qualité des images capturées par le caméscope en exploitant les différences entre le système visuel humain et le système de capture d'images du caméscope.

Une première technique anti-caméscope connue consiste à moduler temporellement la couleur de pixels de l'image source autour de leur valeur de départ dans l'image source. La fréquence de modulation est déterminée pour que la modulation soit invisible à l'oeil humain mais apparaisse sur la copie capturée par le caméscope. Si on module uniquement la chrominance des pixels, la fréquence de modulation est par exemple sélectionnée pour être supérieure à la fréquence de fusion des couleurs de l'oeil humain, qui est de l'ordre de 20 Hz. Si on module uniquement la luminance des pixels, la fréquence de modulation est sélectionnée pour être supérieure à la fréquence de papillottement, qui est de l'ordre de 60 Hz. Les pixels de l'image ainsi modulés peuvent être quelconques mais sont plus généralement sélectionnés pour représenter un motif dit de brouillage sur les images capturées par le caméscope. Ce motif de brouillage est par exemple un message, un texte ou un symbole.

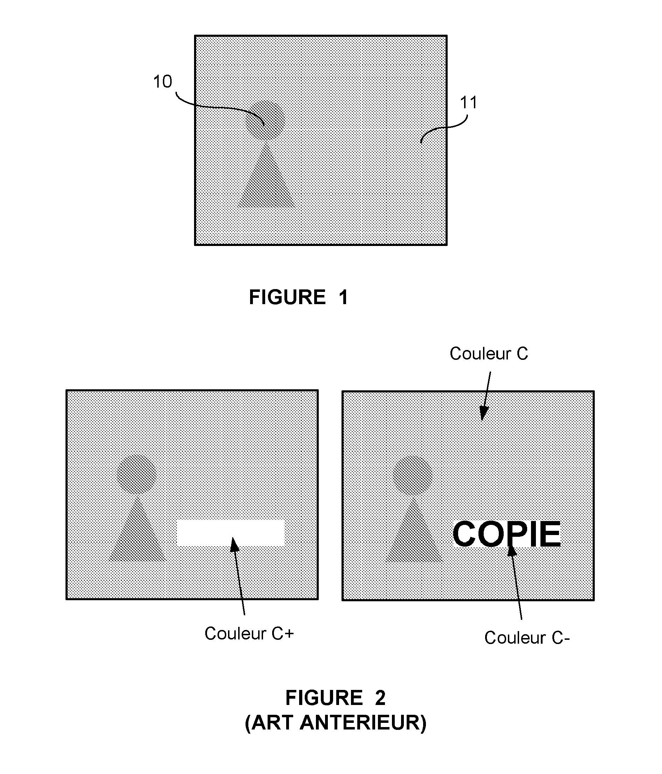

Cette technique de modulation temporelle est illustrée par les figures 1 et 2. La figure 1 montre une image source représentant une scène dans laquelle un personnage 10 est placé devant un fond 11 de couleur différente. Cette image source est à protéger contre la copie. La technique de modulation temporelle consiste à modifier la couleur de certains pixels de l'image pour faire apparaître le motif de brouillage « COPIE » sur les images capturées par le caméscope comme illustré sur la figure 2. Dans ce but, on décompose l'image source de la figure 1 en n images composantes différentes qui seront affichées successivement. Dans l'exemple de la figure 2, l'image source est décomposée en 2 images composantes. Les pixels modulés en couleur appartiennent au fond 11 de la scène. Dans la première image composante (image de gauche), la couleur des pixels du motif est égale à C+ et, dans la deuxième image composante (image de droite), elle est égale à C-. Lorsqu'on affiche ces deux images composantes successivement avec une fréquence d'affichage supérieure à la fréquence de fusion des couleurs, l'oeil humain perçoit une couleur C qui est la moyenne des couleurs C+ et C-. Le motif est donc invisible pour le spectateur légal.

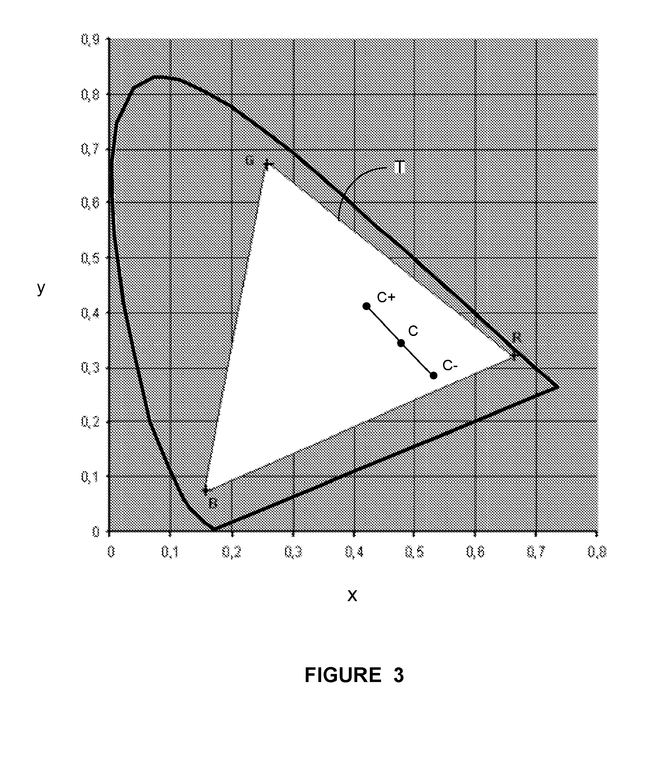

La figure 3 illustre une manière de définir les couleurs C+ et C- par rapport à la couleur C. Dans cet exemple, on considère que les couleurs C+ et C- ont une même luminance et des chrominances différentes. La figure 3 représente le diagramme de chromaticité CIE xy généralement associé à l'espace de couleur CIE xyY où Y représente la luminance et x et y représentent la chrominance. Dans ce diagramme, les chrominances visibles par l'être humain moyen sont comprises dans la zone en forme de fer à cheval. Cette zone est classiquement appelée gamut de la vision humaine. Chaque couleur de l'espace, défini par un point dans l'espace CIE xyY, peut être également défini par un vecteur de couleur (non représenté) reliant l'origine du repère xyY audit point de l'espace. Les couleurs affichables par un projecteur vidéo sont contenues à l'intérieur d'un triangle T dont les extrémités correspondent aux trois primaires du projecteur, à savoir le rouge, le vert et le bleu. L'espace bidimensionnel formé par le diagramme de chromaticité CIE xy n'étant pas linéaire vis-à-vis de la vision humaine, les points identifiant les couleurs C+ et C- sont définis dans un autre espace, l'espace CIE XYZ, qui est reconnu comme étant linéaire vis-à-vis de la vision humaine. Dans l'espace CIE XYZ, les points identifiant les couleurs C+ et C- sont définis de telle sorte qu'ils appartiennent à la droite passant par le point identifiant la couleur C, les deux points représentant les couleurs C+ et C- étant équidistants du point de la couleur C. Bien entendu, pour que ces deux couleurs C+ et C- soient affichables par le projecteur, elles doivent être présentes à l'intérieur du triangle T. Si on raisonne de manière plus générale dans l'espace des couleurs CIEXYZ, le vecteur de couleur associé à la couleur C+ est défini pour être symétrique, par rapport au vecteur de couleur associé à la couleur C, au vecteur de couleur associé à la couleur C-. Par ailleurs, pour augmenter l'amplitude de la modulation et maximiser l'effet sur la copie illégale, on sélectionne de préférence des points C+ et C- les plus distants possibles.

Selon cette technique de modulation temporelle, l'oeil du spectateur intègre les deux couleurs C+ et C- et perçoit alors la couleur résultante qui est la couleur C. Le motif est donc invisible pour le spectateur. Toutefois, lorsque l'intégration des deux couleurs est interrompue par un clignement des yeux ou lorsque les deux images consécutives ne sont pas projetées au même endroit sur la rétine en raison de micro-mouvements des yeux, la couleur du pixel n'est plus correctement reconstruite. Le motif de brouillage peut alors être perçu par le spectateur légal et perturber celui-ci de manière inopportune.

Une autre technique anti-caméscope connue consiste à utiliser des couleurs métamères pour insérer un motif de brouillage dans la séquence d'images comme décrit dans la demande de brevet américain publiée sous le numéro US2004/081318. Deux couleurs sont dites métamères lorsqu'elles sont perçues comme équivalentes par le système visuel humain bien qu'ayant des spectres différents.

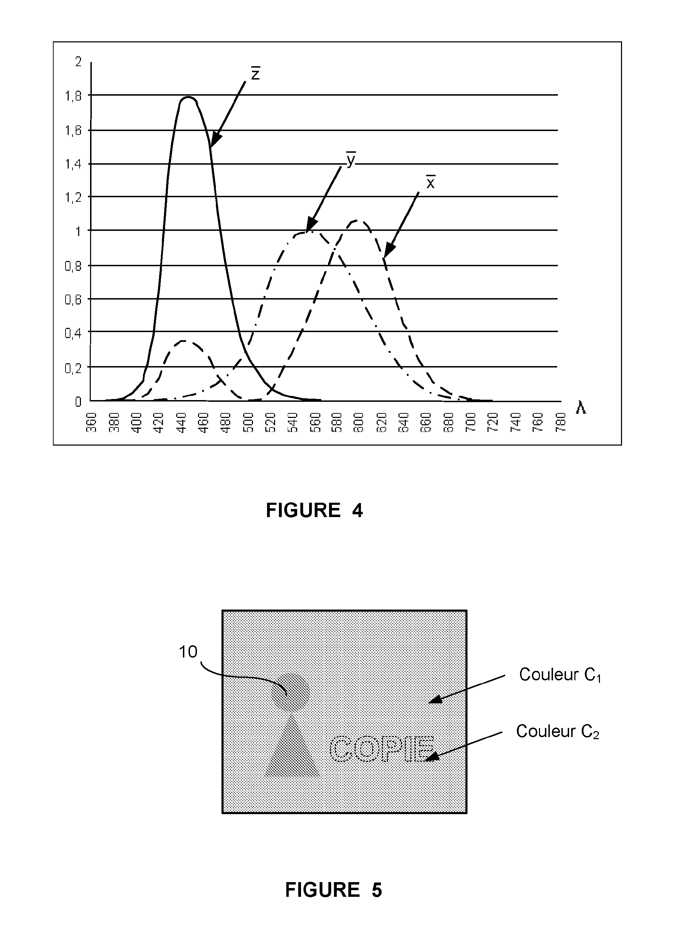

Plus précisément, la commission Internationale de l'éclairage (CIE) a défini trois fonctions colorimétriques, notées $\overline{x}$, $\overline{y}$ et $\overline{z}$, pour la réponse du système visuel humain. Ces trois fonctions représentées sur la figure 4 sont utilisées pour convertir le spectre de la lumière reçue par l'oeil en trois valeurs, notées X, Y et Z respectivement. Ces trois valeurs définissent la couleur perçue par l'oeil. Elles peuvent être calculées de la façon suivante :

$$X = \sum_{400\,nm}^{700\,nm} E(\lambda).\overline{x}(\lambda).\Delta\lambda$$

$$Y = \sum_{400\,nm}^{700\,nm} E(\lambda).\overline{y}(\lambda).\Delta\lambda$$

$$Z = \sum_{400\,nm}^{700\,nm} E(\lambda).\overline{z}(\lambda).\Delta\lambda$$

où $E(\lambda)$ représente l'énergie de l'illuminant.

Il est donc possible de calculer, pour un illuminant dont le spectre est connu, les valeurs X, Y et Z. Il est à noter que, dans des modèles plus complexes, le calcul des valeurs X, Y, Z peut tenir compte de l'âge de observateur, de l'angle de vision et/ou d'autres paramètres.

Si on considère un premier illuminant dont le spectre est $S_1$, la couleur $C_1$ perçue par le spectateur est définie par les valeurs $X_1$, $Y_1$ et $Z_1$ telles que :

$$X_1 = \sum_{400\,nm}^{700\,nm} S_1(\lambda).\overline{x}(\lambda).\Delta\lambda$$

$$Y_1 = \sum_{400\,nm}^{700\,nm} S_1(\lambda).\overline{y}(\lambda).\Delta\lambda$$

$$Z_1 = \sum_{400\,nm}^{700\,nm} S_1(\lambda).\overline{z}(\lambda).\Delta\lambda$$

De même, si on considère un deuxième illuminant dont le spectre est $S_2$ différent de SI, la couleur $C_2$ perçue par le spectateur est définie par les valeurs $X_2$, $Y_2$ et $Z_2$ telles que :

$$X_2 = \sum_{400\,nm}^{700\,nm} S_2(\lambda).\overline{x}(\lambda).\Delta\lambda$$

$$Y_2 = \sum_{400\,nm}^{700\,nm} S_2(\lambda).\overline{y}(\lambda).\Delta\lambda$$

$$Z_2 = \sum_{400\,nm}^{700\,nm} S_2(\lambda).\overline{z}(\lambda).\Delta\lambda$$

L'oeil humain perçoit une couleur équivalente pour C1 et C2 si

$$C_1 \equiv C_2 \Leftrightarrow \begin{cases} X_1 = X_2 \\ Y_1 = Y_2 \\ Z_1 = Z_2 \end{cases}$$

Les couleurs $C_1$ et $C_2$ sont dites métamères si, perçues de manière équivalente par l'oeil humain, elles ont des spectres différents $S_1 \neq S_2$. Comme les valeurs $X_1$, $Y_1$ et $Z_1$ qui définissent visuellement la couleur $C_1$ sont identiques aux valeurs $X_2$, $Y_2$ et $Z_2$ qui définissent visuellement la couleur $C_2$, on dit que $C_1$ et $C_2$ correspondent à une même couleur visuelle. Par extension, on dit que les spectres $S_1$ et $S_2$ sont métamères.

Il est possible de produire facilement des couleurs métamères en utilisant des systèmes de projection à quatre primaires ou plus. Avec ces systèmes, la couleur $C_1$ est par exemple produite en utilisant uniquement trois primaires (la composante couleur correspondant à la quatrième primaire est alors nulle) et la couleur $C_2$ est produite en utilisant les quatre primaires (la composante couleur correspondant à la quatrième primaire est non nulle).

En se référant à nouveau à l'image de la figure 1 et comme illustré à la figure 5, cette technique de métamérisme consiste, dans le cadre d'une application anti-caméscope, à employer la couleur $C_1$ (le spectre $S_1$) pour des pixels du fond qui sont destinés à former le motif anti-brouillage délimité par les pointillés, et la couleur $C_2$ (le spectre $S_2$) pour les autres pixels du fond 11. Sur cette figure, les pointillés définissent la limite entre la zone du fond 11 affichée avec la couleur $C_1$ et la zone du fond affichée avec la couleur $C_2$.

La principale difficulté de cette technique est de reproduire des couleurs métamères $C_1$ et $C_2$ qui soient perçues comme équivalentes par l'oeil humain à partir de combinaisons différentes des primaires du système de projection. Si ces couleurs métamères ne sont pas perçues de manière suffisamment équivalente, le motif de brouillage est alors perçu par le spectateur légal et perturbe celui-ci de manière inopportune.

Lorsque le motif de brouillage risque ainsi d'être perçu, même faiblement, par le spectateur légal, ce défaut est aggravé par les mouvements des objets de la scène par rapport au motif de brouillage, qui, lui, reste généralement fixe sur les images successives. Pour éviter cette aggravation dans le cas de « marques » (« watermarks » en langue anglaise) insérées dans l'image, le document WO2002/023905 enseigne de déplacer le motif avec l'un des objets de la scène, c'est-à-dire d'insérer le motif dans un objet de la scène. Une telle disposition évite l'aggravation des défauts susmentionnés, mais ne les supprime pas puisque le motif continue d'être perçu dans l'objet en mouvement par le spectateur légal.

Résumé de l'invention

Le but de la présente invention est de proposer un procédé de traitement d'image qui réduise les défauts pour le spectateur légal, quel que soit le traitement anti-caméscope employé.

A cet effet, la présente invention propose un procédé de traitement d'une séquence d'images source représentant une scène, comprenant les étapes suivantes :

- détection, dans la scène, d'au moins une zone correspondant à un objet de la scène,
- sélection de la totalité des pixels compris dans ladite au moins une zone dans au moins une image source de la séquence ; et
- traitement de ladite au moins une image source pour modifier la couleur des pixels sélectionnés ou la composition spectrale de la lumière émise par les pixels sélectionnés de sorte que la couleur perçue des pixels sélectionnés soit inchangée dans l'image source traitée par rapport à l'image source.

Selon ce procédé, aucun élément spécifique comme un message n'est ajouté à la scène pour servir de motif anti-brouillage, lequel élément pourrait engendrer des défauts pour le spectateur légal. Selon l'invention, le motif anti-brouillage est un objet de la scène représentée par la séquence d'images source. A noter que dans le document US6813367, seule une partie (et non la totalité) des pixels compris dans une zone correspondant à un objet (ici, l'objet est une lettre d'un texte) est sélectionnée pour modification de couleur, à savoir les pixels d'une région d'un trait d'une lettre !

De préférence, le contour de la zone correspondant à un objet de la scène est le lieu géométrique d'extremums de la dérivée première des couleurs, ou le lieu géométrique de maximums de l'intensité du gradient des couleurs, ou encore le lieu d'annulation de la dérivée seconde des couleurs. Par exemple, le long de toute ligne droite de pixels traversant ce contour et de préférence normale à ce contour au point d'intersection avec ce contour, la dérivée première des couleurs le long de cette ligne passe par un extremum, ou la dérivée seconde le long de cette ligne s'annule. A noter que dans le cas où cet objet serait une lettre comme dans le document US6813367, ce lieu géométrique délimite les contours de l'ensemble de cette lettre, et non d'un trait de cette lettre.

Selon un premier mode de réalisation basé sur une modulation temporelle de la couleur des pixels de la zone détectée, l'étape de traitement de l'image source comprend une étape décomposition de ladite au moins une image source en n images composantes différentes, un vecteur de couleur étant associé à chacun des pixels de ladite image source et des images composantes dans un espace couleur prédéterminé, le vecteur de couleur associé à chaque pixel de ladite image source étant égale à la résultante divisée par n des vecteurs de couleur associés aux n pixels des images composantes correspondant audit pixel de l'image source.

Dans ce mode de réalisation, on peut avantageusement détecter plusieurs zones, à savoir une première zone et une deuxième zone correspondant chacune à un objet de la scène représentée, sélectionner séparément la totalité des pixels compris dans lesdites première et deuxième zones puis traiter les images composantes de manière à ce que, pour au moins une image composante, le vecteur différence entre le vecteur de couleur associé à au moins un pixel de la première zone de l'image source et le vecteur de couleur associé au pixel correspondant dans ladite image composante soit sensiblement de même direction et de sens opposé au vecteur différence entre le vecteur de couleur associé à au moins un pixel de la deuxième zone de l'image source et le vecteur de couleur associé au pixel correspondant dans ladite image composante.

Selon un deuxième mode de réalisation basé sur le métamérisme, l'étape de traitement de ladite au moins une image source comprend une étape de remplacement de la couleur des pixels sélectionnés par une couleur métamère.

Avantageusement, pour une pluralité d'images source consécutives identiques, on peut faire varier la couleur métamère utilisée pour les pixels sélectionnés. Dans ce cas, pour un même pixel sélectionné dans deux images source consécutives identiques, la couleur métamère employée dans la première des deux images source consécutives est différente de la couleur métamère employée dans la deuxième des deux images source consécutives.

L'invention concerne également un procédé d'affichage d'une séquence d'images source dans lequel au moins une desdites images source est traitée par le procédé de traitement précité basé sur la modulation temporelle de la couleur pour être décomposée en n images composantes différentes, et dans lequel on affiche successivement lesdites images composantes à une fréquence d'affichage à n fois la fréquence d'affichage de la séquence d'images source, la fréquence d'affichage des images composantes étant supérieure à la fréquence de fusion des couleurs pour l'oeil humain.

Brève description des figures

L'invention sera mieux comprise, et d'autres buts, détails, caractéristiques et avantages apparaîtront plus clairement au cours de la description explicative détaillée qui va suivre, en référence aux dessins annexés, parmi lesquels :

- la figure 1 représente une image source à protéger contre la copie;
- la figure 2 illustre un procédé anti-caméscope basé sur une modulation temporelle de la couleur et appliqué à l'image de la figure 1 ;
- la figure 3 représente un diagramme de chromaticité CIExy illustrant la manière dont sont sélectionnées les couleurs à utiliser dans le cas d'une modulation de chrominance ;
- la figure 4 représente les fonctions colorimétriques $\overline{x},\ \overline{y}$ et $\overline{z}$ définies par la commission Internationale de l'éclairage (CIE) pour caractériser la réponse du système visuel humain ;
- la figure 5 illustre un procédé anti-caméscope basé sur le métamérisme et appliqué à l'image de la figure 1 ;
- la figure 6 représente les étapes du procédé de l'invention ;
- la figure 7 illustre un mode particulier du procédé de l'invention lorsque le traitement anti-caméscope appliqué à l'image source de la figure 1 est basé sur une modulation temporelle de la couleur;
- la figure 8 illustre une variante du procédé de la figure 7 ;
- la figure 9 représente un diagramme de chromaticité CIExy illustrant la manière dont sont sélectionnées les couleurs utilisées dans les procédés illustrés par les figures 7 et 8; et
- la figure 10 illustre un mode particulier du procédé de l'invention lorsque le traitement anti-caméscope appliqué à l'image source de la figure 1 est basé sur le métamérisme.

Description détaillée de modes de réalisation préférés

Selon l'invention, il est proposé de détecter au moins un objet dans la scène capturée et d'utiliser cet objet comme motif de brouillage, c'est-à-dire que les pixels de l'image appartenant à cet objet sont modulés en chrominance et/ou luminance ou sont spectralement modifiés pour faire apparaître le motif anti-brouillage sur les copies capturées par un caméscope. Ainsi, la forme, la taille et la position du motif de brouillage sont définies par au moins un objet de la scène filmée.

De cette manière, les endroits où les défauts engendrés par le traitement anti-caméscope (modulation temporelle ou métamérisme) pourraient apparaître sont des zones de l'image correspondant à des contours d'objets dans l'image. Il en résulte que ces défauts éventuels sont moins perceptibles par le téléspectateur légal.

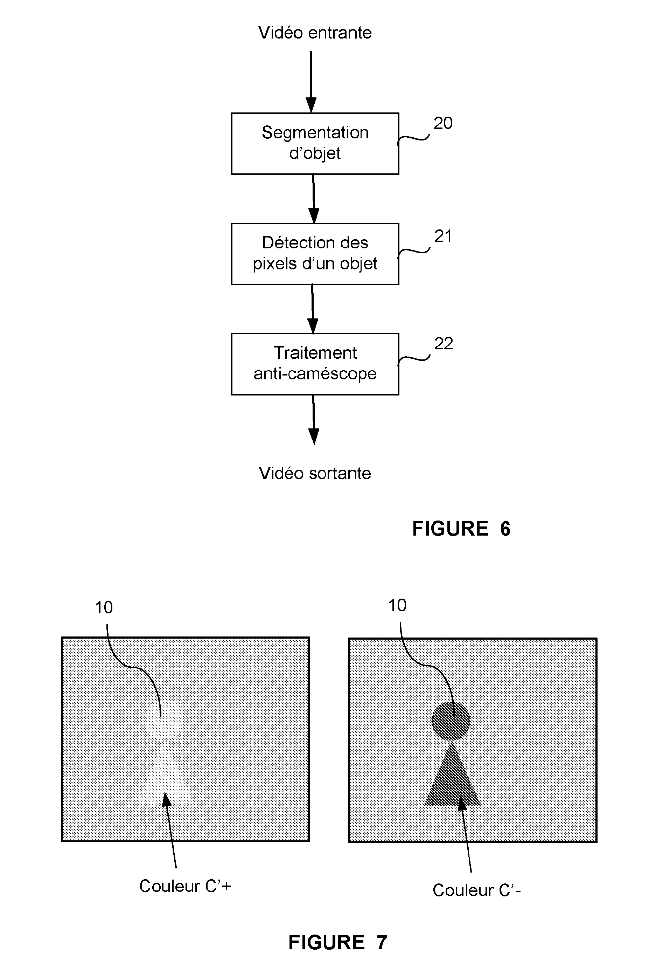

Le procédé de l'invention est illustré par la figure 6. Ce procédé est appliqué à au moins une image source de la séquence d'images à protéger contre la copie. Il comprend une étape 20 de segmentation destiné à détecter au moins une zone dans l'image source correspondant à un objet de la scène représentée par l'image source. Cette étape est par exemple mise en oeuvre par un algorithme ou procédé de segmentation d'objets tel que celui décrit dans la demande de brevet FR 2 880 455 ou par un procédé de segmentation par contours actifs. Cette étape de segmentation vise à détecter des objets dans la scène filmée. Ces objets peuvent être détectés par la délimitation de leur contour à l'aide d'une méthode classique basée sur la détection des extremums de la dérivée première des couleurs, ou la détection des maximums de l'intensité du gradient des couleurs. On peut utiliser à cet effet un filtre spatial de Prewitt, de Sobel, ou de Canny. Cette délimitation de contour peut également être basée sur la détection de l'annulation de la dérivée seconde des couleurs, en particulier l'annulation du Laplacien des couleurs. Dans cette étape, une zone d'image correspondant à un objet de la scène est une zone délimitée par un contour.

Au cours de l'étape suivante, référencée 21, on sélectionne la totalité des pixels d'au moins un des objets détectés à l'étape précédente.

Au cours de l'étape suivante, référencée 22, on applique un traitement anti-caméscope (basé sur une modulation temporelle de la couleur ou sur le métamérisme) aux pixels sélectionnés à l'étape 21. Comme la totalité des pixels a été sélectionnée, cette sélection recouvre entièrement l'un des objets détectés et le traitement anti-caméscope ne fait apparaître aucun nouvel objet dans l'image source traitée.

Si on applique ce procédé à l'image source de la figure 1, on obtient les résultats suivants. A l'étape 20, le personnage 10 est détecté dans l'image source. A l'étape 21, on sélectionne tous les pixels du personnage 10. A l'étape 22, on applique le traitement anti-caméscope aux pixels du personnage 10.

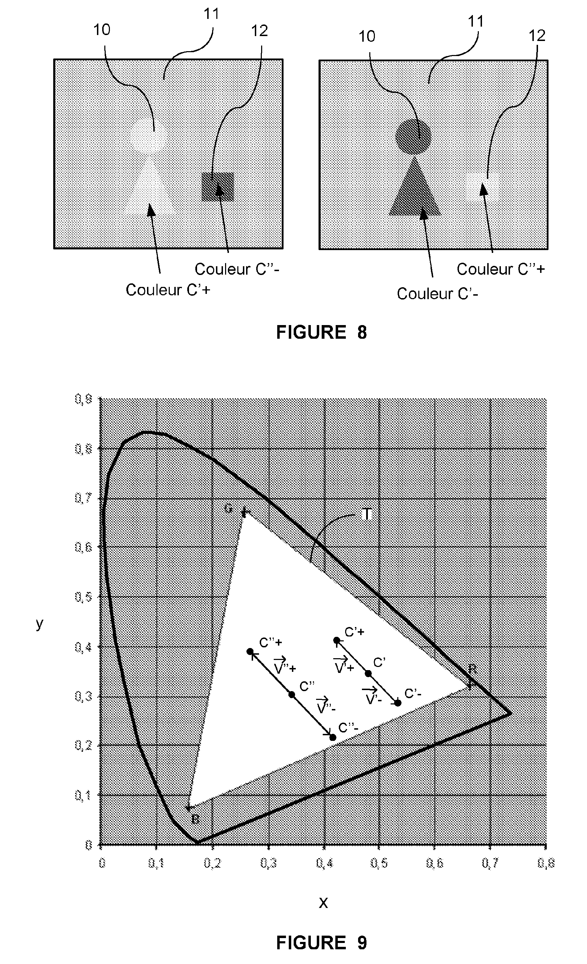

La figure 7 illustre le cas où le traitement anti-caméscope est une modulation temporelle de la luminance et/ou chrominance du personnage 10 employant deux images composantes. Le personnage 10, de couleur C' dans l'image source de la figure 1, est affiché avec une couleur C'+ dans la première image composante puis avec une couleur C'- dans la deuxième image composante, les couleurs C'+ et C'- étant définies pour que l'oeil humain perçoive la couleur C' lorsque ces deux images composantes sont affichées l'une après l'autre avec une fréquence supérieure à la fréquence de fusion des couleurs. Les couleurs C'+ et C'- sont déterminés par rapport à la couleur comme montré à la figure 9. Les vecteurs de couleur associés aux couleurs C'+ et C'- sont déterminés de manière à être symétrique par rapport au vecteur de couleur associé à la couleur C' et, avantageusement, de manière à ce que la distance entre les points C'+ et C'- soient maximale dans l'espace CIE XYZ..

Il en résulte que, si l'intégration temporelle des deux images qui est effectuée par l'oeil est interrompue par un clignement des yeux du spectateur ou est perturbée par des micro-mouvements des yeux, la couleur du personnage 10 n'est peut-être pas parfaitement reconstruite au niveau de ses contours, ce qui engendre un léger défaut, mais ce défaut est peu gênant pour le spectateur légal car il ne fait pas apparaître de nouveaux objets dans l'image affichée.

Selon un perfectionnement, on sélectionne, parmi les objets détectés au cours de l'étape 20, séparément la totalité des pixels de deux objets et on fait varier la couleur de ces objets de manière opposée. Ce mode de réalisation est illustré par la figure 8. Pour ce mode de réalisation, on considère une image source identique à celle de la figure 1 dans laquelle on a rajouté un objet supplémentaire 12 de couleur C''. Ainsi, au cours de l'étape 20, on détecte deux objets : l'objet 10 et l'objet 12. On génère deux images composantes à partir de cette image source. Dans la première image composante, l'objet 10 est affiché avec la couleur C'+ et l'objet 12 est affiché avec une couleur C''-. Dans la deuxième image composante, l'objet 10 est affiché avec la couleur C'- et l'objet 12 est affiché avec la couleur C''+. Les couleurs C'+ et C'- sont définis par rapport à la couleur C' comme illustré à la figure 9, à savoir que le vecteur de couleur associé à la couleur C'+ est symétrique, par rapport au vecteur de couleur associé à la couleur C', au vecteur de couleur associé à la couleur C'-. De même, le vecteur de couleur associé à la couleur C''+ est défini pour être symétrique, par rapport au vecteur de couleur associé à la couleur C'', au vecteur de couleur associé à la couleur C''-. Selon ce mode de réalisation perfectionné, le vecteur, noté $\overline{V}$''- (respectivement $\overline{V}$''+), reliant le point C'' au point C''-(respectivement C''+) est de même direction mais de sens inverse que le vecteur, noté $\overline{V}$'- (respectivement $\overline{V}$'+), reliant le point C' au point C'-(respectivement C'+) dans l'espace des couleurs utilisé. En affichant, dans la première image composante, la couleur C'+ pour l'objet 10 et la couleur C''- pour l'objet 12, on modifie la couleur de ces objets dans des sens opposés, ce qui peut augmenter la gêne du spectateur illégal.

Selon une variante, le deuxième objet peut être défini par rapport au premier objet, le deuxième objet étant par exemple la partie de l'image ne renfermant pas le premier objet. Si l'image comporte un seul objet, le deuxième objet correspond au fond de l'image. Les couleurs du premier objet et du fond de l'image sont alors modifiées dans des sens opposés.

Dans le cas d'un traitement anti-copie basé sur le métamérisme, le personnage 10 est affiché avec une couleur C' qui est métamère de la couleur C. Dans ce cas, le spectre noté S'$_1$ correspondant à la couleur C'$_1$ est donc différent du spectre S' correspondant à la couleur C'. La couleur du personnage sur la copie illégale est donc différente de celle de l'image source puisque le caméscope ne capture pas les images comme l'oeil humain. La couleur du personnage sur la copie illégale n'est alors pas conforme à celle de l'image source.

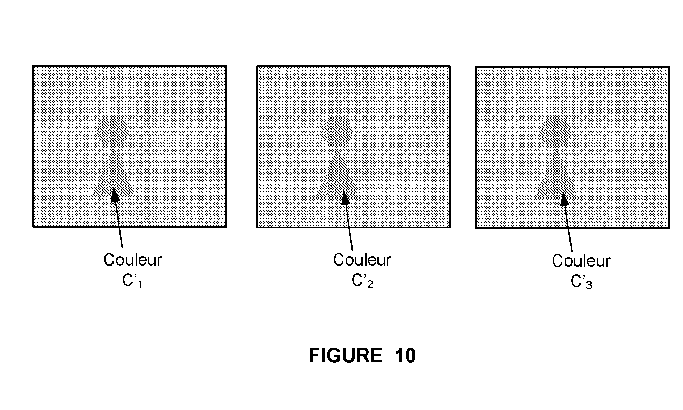

Cette non-conformité de la couleur du personnage 10 n'est toutefois pas forcément très gênante. Aussi, pour augmenter la gêne du spectateur illégal, il est proposé, selon un perfectionnement, de faire varier temporellement la couleur métamère utilisée pour afficher l'objet servant de motif anti-brouillage. Ce perfectionnement est illustré par la figure 10. Dans une première image de la séquence vidéo, le personnage 10 est affiché avec une couleur C'$_1$ qui est métamère à la couleur C'. Dans l'image suivante, le personnage est affiché avec une deuxième couleur C'$_2$ métamère de la couleur C'. Dans l'image suivante, le personnage est affiché avec une troisième couleur C'$_3$ métamère de la couleur C'. On peut ainsi faire varier, périodiquement ou pas, les couleurs employées pour afficher l'objet servant de motif anti-brouillage. Dans le cadre d'un dispositif de projection à 4 primaires, les couleurs métamères peuvent être obtenues en modifiant la valeur des composantes couleur des 4 primaires. Bien entendu, on peut augmenter le nombre de couleurs métamères possibles en utilisant un dispositif de projection ayant plus de 4 primaires.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. Notamment, dans le cadre d'un traitement anti-caméscope basé sur une modulation temporelle, le nombre n d'images composantes n'est pas limité à 2.

**Revendications**

1. Procédé de traitement d'une séquence d'images source représentant une scène, **caractérisé en ce qu'**il comprend les étapes suivantes :

- détection (20), dans ladite scène, d'au moins une zone correspondant à un objet de la scène,
- sélection (21) de la totalité des pixels compris dans ladite au moins une zone d'au moins une image source de la séquence ; et
- traitement (22) de ladite au moins une image source pour modifier la couleur des pixels sélectionnés ou la composition spectrale de la lumière émise par les pixels sélectionnés de sorte que la couleur perçue des pixels sélectionnés soit inchangée dans l'image source traitée par rapport à l'image source.

2. Procédé selon la revendication 1 **caractérisé en ce que**, dans l'au moins une image source de la séquence, le contour de l'au moins une zone correspondant à un objet de la scène est le lieu géométrique d'extremums de la dérivée première des couleurs, ou le lieu géométrique de maximums de l'intensité du gradient des couleurs, ou le lieu géométrique d'annulation de la dérivée seconde des couleurs.

3. Procédé selon la revendication 1 ou 2, dans lequel l'étape de traitement de ladite au moins une image source comprend une étape décomposition de ladite au moins une image source en n images composantes différentes, un vecteur de couleur étant associé à chacun des pixels de ladite image source et des images composantes dans un espace couleur prédéterminé, le vecteur de couleur associé à chaque pixel de ladite image source étant égale à la résultante divisée par n des vecteurs de couleur associés aux n pixels des images composantes correspondant audit pixel de l'image source.

4. Procédé selon la revendication 3, dans lequel on détecte des première et deuxième zones correspondant chacune à un objet de ladite scène, on sélectionne séparément la totalité des pixels compris dans lesdites première et deuxième zones et on traite les images composantes de manière à ce que, pour au moins une image composante, le vecteur différence ($\overline{V}'- $ ; $\overline{V}'+$) entre le vecteur de couleur associé à au moins un pixel de la première zone de l'image source et le vecteur de couleur associé au pixel correspondant dans ladite image composante soit sensiblement de même direction et de sens opposé au vecteur différence ($\overline{V}''+ $ ; $\overline{V}''- $) entre le vecteur de couleur associé à au moins un pixel de la deuxième zone de l'image source et le vecteur de couleur associé au pixel correspondant dans ladite image composante.

5. Procédé d'affichage d'une séquence d'images source dans lequel au moins une desdites images source est traitée par le procédé selon la revendication 3 ou 4 pour être décomposée en n images composantes différentes, et dans lequel on affiche successivement lesdites images composantes à une fréquence d'affichage à n fois la fréquence d'affichage de la séquence d'images source, **caractérisé en ce que** la fréquence d'affichage des images composantes est supérieure à la fréquence de fusion des couleurs pour l'oeil humain.

6. Procédé selon la revendication 1 ou 2, dans lequel l'étape de traitement de ladite au moins une image source comprend une étape de remplacement de la couleur des pixels sélectionnés par une couleur métamère.

7. Procédé selon la revendication 6, dans lequel, pour un même pixel sélectionné ayant, dans deux images source consécutives, la même couleur visuelle, la couleur métamère employée dans la première des deux images source consécutives est différente de la couleur métamère employée dans la deuxième des deux images source consécutives.

10

11

**FIGURE 1**

Couleur C

**COPIE**

Couleur C+

Couleur C-

**FIGURE 2
(ART ANTERIEUR)**

FIGURE 3

**FIGURE 4**

**FIGURE 5**

Vidéo entrante

Segmentation
d'objet 20

Détection des
pixels d'un objet 21

Traitement
anti-caméscope 22

Vidéo sortante

**FIGURE 6**

10 10

Couleur C'+ Couleur C'-

**FIGURE 7**

Couleur C''-
Couleur C'+

Couleur C''+
Couleur C'-

FIGURE 8

FIGURE 9

Couleur
$C'_1$

Couleur
$C'_2$

Couleur
$C'_3$

**FIGURE 10**

Europäisches
Patentamt

European
Patent Office

Office européen
des brevets

**RAPPORT DE RECHERCHE EUROPEENNE**

Numéro de la demande

EP 09 16 1846

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 813 367 B1 (BHATTACHARJYA ANOOP [US]) 2 novembre 2004 (2004-11-02) * abrégé * * colonne 1, ligne 60 - colonne 2, ligne 15 * ----- | 1 | INV. G06T1/00 |
| Y | WO 02/23905 A (DIGIMARC CORP [US]; LEVY KENNETH L [US]) 21 mars 2002 (2002-03-21) * page 2, ligne 13-31 * * page 5, ligne 8-19 * * page 6, ligne 23-28 * * page 7, ligne 23 - page 8, ligne 12 * ----- | 1-7 | |
| Y | EP 1 830 582 A (THOMSON LICENSING [FR]) 5 septembre 2007 (2007-09-05) * abrégé * * alinéas [0006], [0007], [0015], [0026] - [0028]; figure 6 * ----- | 1-7 | |
| Y | US 2007/121996 A1 (BLONDE LAURENT [FR] ET AL) 31 mai 2007 (2007-05-31) * alinéas [0001] - [0003], [0016] - [0019], [0031] - [0038], [0058] - [0060] * ----- | 1-7 | DOMAINES TECHNIQUES RECHERCHES (IPC) G06T |
| Y | US 2006/008144 A1 (PRASAD LAKSHMAN [US] ET AL) 12 janvier 2006 (2006-01-12) * alinéas [0005], [0006], [0025] - [0029] * ----- | 2 | |
| A | US 2004/081318 A1 (BILOBROV SERGIY [CA] ET AL) 29 avril 2004 (2004-04-29) * abrégé * * alinéas [0006], [0007], [0016] - [0019], [0031] * ----- | 1-7 | |

Le présent rapport a été établi pour toutes les revendications

| Lieu de la recherche | Date d'achèvement de la recherche | Examinateur |
|---|---|---|
| Munich | 28 août 2009 | Zamuner, Umberto |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 16 1846

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-08-2009

| Document brevet cité au rapport de recherche | | Date de publication | Membre(s) de la famille de brevet(s) | | Date de publication |
|---|---|---|---|---|---|
| US 6813367 | B1 | 02-11-2004 | JP | 2002199206 A | 12-07-2002 |
| WO 0223905 | A | 21-03-2002 | AU | 9265901 A | 26-03-2002 |
| EP 1830582 | A | 05-09-2007 | BR | PI0700464 A | 06-11-2007 |
| | | | CN | 101031090 A | 05-09-2007 |
| | | | EP | 1830583 A1 | 05-09-2007 |
| | | | JP | 2007235965 A | 13-09-2007 |
| | | | US | 2007212024 A1 | 13-09-2007 |
| US 2007121996 | A1 | 31-05-2007 | CN | 1853419 A | 25-10-2006 |
| | | | EP | 1665811 A1 | 07-06-2006 |
| | | | WO | 2005027529 A1 | 24-03-2005 |
| | | | FR | 2859857 A1 | 18-03-2005 |
| | | | JP | 2007506311 T | 15-03-2007 |
| | | | KR | 20060080193 A | 07-07-2006 |
| US 2006008144 | A1 | 12-01-2006 | EP | 1812886 A1 | 01-08-2007 |
| | | | WO | 2006016971 A1 | 16-02-2006 |
| US 2004081318 | A1 | 29-04-2004 | AU | 2003287229 A1 | 25-05-2004 |
| | | | CA | 2503835 A1 | 13-05-2004 |
| | | | EP | 1557031 A2 | 27-07-2005 |
| | | | JP | 2006505191 T | 09-02-2006 |
| | | | KR | 20050087789 A | 31-08-2005 |
| | | | WO | 2004040899 A2 | 13-05-2004 |
| | | | US | 2008187247 A1 | 07-08-2008 |

EPO FORM P0460

**RÉFÉRENCES CITÉES DANS LA DESCRIPTION**

**Documents brevets cités dans la description**

- US 20040081318 A
- WO 2002023905 A
- US 6813367 B
- FR 2880455